# EUROPEAN PATENT APPLICATION

(11) **EP 2 260 962 A2**
(43) Date of publication of application: **15.12.2010**
(21) Application number: 10165383.0
(22) Date of filing: 09.06.2010
(51) Int. Cl.: B23D 59/00

(54) **Method and system for sizing and manufacturing building elements**

(30) Priority: 10.06.2009 FI 20095648
(71) Applicant: Vectors Turning Oy, 02920 Espoo (FI)
(72) Inventor: Syrjä, Reino, 02920, Espoo (FI); Karevaara, Aki, 02920, Espoo (FI)
(74) Representative: Helino, Timo Kalervo

(57) **Abstract**

The present invention relates to a method for sizing and manufacturing building elements, wherein an identifier of a measurement location is determined in a measuring device and at least one distance measurement is performed by the measuring device. A message which comprises at least one distance measurement and the identifier of the measurement location is formed in the measuring device. This message is sent from the measuring device to a remote node through a data network. The remote node is the control unit of a sawing device.

## Description

### FIELD OF THE INVENTION

The present invention relates to building elements to be manufactured according to measurement data. Specifically, the invention relates to a method and a system for sizing and manufacturing building elements.

### BACKGROUND OF THE INVENTION

The forming of standard-sized sold building elements which are to be sized for a building or renovation location into pieces that suit the location is difficult and takes much time. Bringing the elements to the location as standard-sized elements constitutes a problem, since a large number of waste bits is left over from standard-sized pieces. Forming the elements on the location also requires one to bring tools on the location. Often, many chances for mistakes and resizing needed to correct them are part of the work. In some cases, the result may be careless at certain points. Such standard-sized sold building elements include for example plastic and metal tubes, beams, slabs and cornices or baseboards. Particularly, installation of baseboards is difficult due to so-called miter angles. By a miter angle is meant fitting together of baseboards joining at a corner by a beveled edge so that a gap is not left between the moldings.

In the solutions according to the prior art, in measuring baseboards and miter angles, the lengths of the walls are measured either by an optical meter or for example by measuring tape. The angles are determined by a separate mechanical or electronic angle meter. According to measurement results, the standard-sized baseboards or residual pieces, i.e. remnant pieces, brought on the location are sawed to wall-sized pieces, the ends of which are sawed according to the miter angle of the intended corner. Ordering finished baseboards according to manually made measurements is prone to mistakes because recipient of the order does not necessarily have access to a model or a floor plan of the location. And even if the floor plan did exist, the final measure may differ from the planned one. Receiving and processing such orders also takes much time and human resources.

### OBJECTIVE OF THE INVENTION

The objective of the present invention is to solve the problems relating to the above-mentioned method of measuring and manufacturing building elements according to the prior art.

Concerning the characteristic features of the present invention, reference is made to the claims.

### SUMMARY OF THE INVENTION

According to one aspect of the invention, a method for sizing and manufacturing building elements is presented. The method comprises the steps:
determining an identifier of a measurement location on a measuring device; performing at least one distance measurement by the measuring device; forming a message which comprises at least one distance measurement and the identifier of the measurement location; and sending the message from the measuring device to a remote node through a data network.

According to one aspect of the invention, a system for sizing and manufacturing building elements is also presented, the system comprising a measuring device arranged to receive an identifier of a measurement location, to perform at least one distance measurement, to form a message which comprises said at least one distance measurement and said identifier of the measurement location, and to send said message from the measuring device to a remote node through a data network; and a sawing device arranged to receive said message, to control the sawing length based on the distance measurement included in said message, and to saw at least one building element.

According to one aspect of the invention, an electronic measuring device is also presented, comprising: a user interface arranged to receive an identifier of a measurement location; a distance meter arranged to perform at least one distance measurement; a processor to form a message which contains at least one distance measurement; and a transmitter arranged to send the message to a remote node through a data network.

According to one aspect of the invention, a sawing device is also presented, comprising: a computer unit arranged to receive a message, to control the sawing length based on a distance measurement included in the message, to register the lengths of at least two remnant pieces stored in a remnant depot, and to control the remnant depot to deliver a selected remnant piece; at least one feed depot for storing feed pieces, arranged to deliver at least one feed piece; a remnant depot to store at least two remnant pieces; a feeding device; and a saw for forming a building element from at least one feed piece.

According to one aspect of the invention, a computer program is also presented, comprising the steps: receiving an identifier of a measurement location; performing at least one distance measurement by a distance measuring device; forming a message which comprises at least one distance measurement and the identifier of the measurement location; and sending the message from the measuring device to a remote node through a data network.

In one embodiment of the invention, the message is received in the computer unit of the sawing device. The sawing device is controlled by the computer unit. The sawing length is controlled in the sawing device based on at least one distance measurement included in the message from the computer unit. The sawing length is controlled for example by the feeding device or by a holder. After this, at least one building element is sawed by the saw of the sawing device.

In one embodiment of the invention, at least one building element is removed from the sawing device by belts controlled by the computer unit or by other means. At least one building element is moved to a packing device by the belts controlled by the computer unit or by other means. At least one building element is tied by the packing device. The identifier of the measurement location is printed by a printer and connected to at least one building element. The connecting is carried out either by gluing by a gluing device or by printing by the printer directly on the surface of at least one building element in a packing machine.

In one embodiment of the invention, an identifier of at least one angle is formed in the measuring device for example by the user interface. The magnitude of at least one angle is determined by the measuring device. Then, the length of at last one side relating to at least one angle is determined by the processor based on at least one distance measurement. After this, the magnitude of at least one angle is added by the processor to the message which is sent by the transmitter to the computer unit. In one embodiment of the invention, there may be several messages.

In one embodiment of the invention, a model is formed by the processor in the memory of the measuring device according to the magnitude of at least one angle and according to the length of at least one side relating to at least one angle in the measuring device.

In one embodiment of the invention, at least one inconsistence is searched for by the processor in the measuring device from the model, the inconsistence comprising for example a case in which at least two sides relating to the model intersect. In this case, the user is informed of the inconsistence using the user interface.

In one embodiment of the invention, the method further comprises the step: controlling the sawing angle in the sawing device based on the magnitude of at least one angle included in the message. The controlling is carried out by the computer unit of the sawing device.

In one embodiment of the invention, the measuring device comprises a distance meter. In one embodiment of the invention, the distance meter is a laser distance meter. In one embodiment of the invention, the measuring device comprises two distance meters which may be laser distance meters. In one embodiment of the invention, the measuring device comprises an angle measuring device. In one embodiment of the invention, the angle measuring device is formed from an upper part of the measuring device and a lower part connected thereto by hinges or by other coupler. In one embodiment of the invention, connected to the hinges is an adjustable resistor, the resistance of which depends on the angle of the hinge.

In one embodiment of the invention, the sawing device comprises at least one feed depot which is arranged to store feed pieces one on top of the other and to drop feed pieces one by one on belts which guide the feed piece to a feed surface of the sawing device.

In one embodiment of the invention, the sawing device is placed in a movable truck container or trailer, in which case it can be moved to different locations.

In one embodiment of the invention, the sawing surface is arranged to tilt laterally and thus, according to its tilting angle, to pick feed pieces from at least one feed depot, to receive a feed piece from the remnant depot, to pass a feed piece to the remnant depot or to hold a feed piece in the correct angle for making the desired sawed surface on the feed piece.

In one embodiment of the invention, the computer program is stored on a computer-readable medium.

In one embodiment of the invention, the measuring device is a corner measuring device by which the lengths of corners and sides relating to them are measured.

In one embodiment of the invention, the measuring device is arranged to communicate with a separate mobile station over a short range radio communication which may be for example BLUETOOTH™. In this case, the measuring device comprises a short range radio receiver and transmitter. In one embodiment of the invention, the measuring device is arranged to communicate with a separate mobile station through a cable, for example a USB plug. In one embodiment of the invention, the user interface of the separate mobile station functions as the user interface of the measuring device, in which case the user interface of the measuring device may constitute, for example, only a measurement start button. In this case, the measuring device may also lack the display.

In one embodiment of the invention, the measuring device is used to measure the length of vertical bars of a partition wall to be built. This is carried out by a separate function of the user interface, for example by a button or a menu function. In this case, the measuring device conveys the information about the height and length of the wall to the computer unit of the sawing device. In this case, the computer unit selects a feed depot containing vertical bars of a partition wall as the feed depot and saws the vertical bars in a number which corresponds to the repeating distance between the vertical bars. The length of the vertical bars is sawed according to the measured height. In addition, the thicknesses of horizontal bars below or above may be reduced from the length of the vertical bars.

In one embodiment of the invention, the identification information of the location is transmitted beforehand to the measuring device through a communications network for example from the computer unit or an arbitrary server in the communications network. In this case, the user just selects the location from a list or directory by the display and the user interface before beginning the measurement.

The embodiments of the invention presented above can be used as combined together in an arbitrary manner. One or more of the above-mentioned embodiments of the invention may be used together with another embodiment of the invention to further form a new embodiment of the invention. For example, the method, system, electronic measuring device, sawing device or computer program according to the invention may comprise at least one of the above-mentioned embodiments of the invention.

The advantages of the invention relate to quicker and simpler measuring and manufacturing of building elements. By the invention, it is possible considerably to save time in the measurement, manufacture and installation of baseboards or cornices. In addition, by the invention, the amount of waste material to be produced is minimized because waste pieces can be automatically reused by the remnant depot. In addition, several users can simultaneously use the sawing device, unlike a conventional miter saw. By the invention, the measurement errors and the resultant loss of time and waste pieces are additionally minimized.

### LIST OF FIGURES

Fig. 1 represents a diagram of one computer-controlled sawing device according to the present invention,
Fig. 2 represents a block diagram of one computer-controlled sawing device and packing device according to the present invention,
Fig. 3 represents one measuring device according to the present invention,
Fig. 4 represents the use of the measuring device according to Fig. 3 on a measurement location,
Fig. 5 represents one method according to the present invention for sizing and manufacturing building elements, and
Fig. 6 represents a side view of one feed depot according to the present invention,

### DETAILED DESCRIPTION OF THE INVENTION

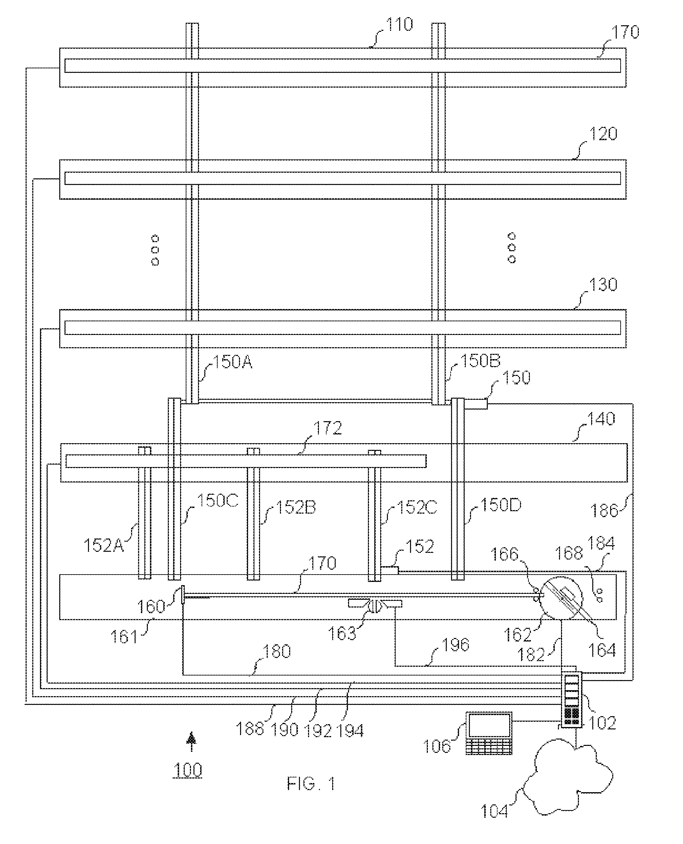

Fig. 1 represents a diagram of one computer-controlled sawing device according to the present invention. The sawing device 100 comprises a computer unit 102 which is connected to a communications network 104. The sawing device also comprises a piece feeding device 160, a sawing surface 161, a saw rotating platform 162, a saw 164, feeding wheels 166 and removing wheels 168. The sawing device also comprises at least one feed depot, such as the feed depots 110, 120 and 130 depicted in Fig. 1. The sawing device 100 also comprises at least one remnant depot, such as the remnant depot 140. In one embodiment of the invention, remnant pieces complying with at least a specific fixed size are placed in the remnant depot 140 for later use.

In one embodiment of the invention, the communications network 104 is a mobile telephone network, in which case the computer unit 102 comprises a mobile station, a corresponding mobile station module, or a data card. The mobile telephone network may be for example a GSM, GPRS or 3G network. In one embodiment of the invention, the communications network 104 is a wireless local area network or other wireless network. In one embodiment of the invention, the communications network 104 comprises at least one short range radio network or radio communication and a mobile network. The computer unit may also comprise a connection to a portable computer 106. The computer unit is also provided with keyboard and display connections such as USB plugs.

In one embodiment of the invention, the sawing device 100 also comprises a planing machine 163 which is arranged to plane a feed piece, for example a baseboard, to correspond to the curvature of a wall. In this case, the planing machine 163 planes the back of the baseboard in one or more areas to correspond to the curves of a specific depth as measured from the wall. More generally, this means that the planing machine 163 planes on the feed piece a curvature profile fitting with the curvature of the wall.

The computer unit 102 is arranged to control, via a connection 180, the piece feeding device 160 which is arranged to move a feed piece 170 being processed in the direction of and away from the saw 164. The computer unit 102 is arranged to control, via a connection 182, the rotation of the saw rotating platform 162 and the saw 164 to execute the cutting. The saw rotating platform 162 accounts for example for the correct adjustment of miter angles. The saw 164 is for example a normal circular or chain saw. In one embodiment of the invention, the feeding wheels 166 account for keeping the sawing piece straight. Instead of feeding wheels 166, other supports may be used. The computer unit 102 registers in its memory the distance between the saw and the piece feeding device. Thus, the information about the length of each remnant piece left over from a newly sawed building element and about the associated angle resides in the memory of the computer unit 102. In one embodiment of the invention, the computer unit 102 is also arranged to control, by a connection 196, the planing machine 163, for example its cutting depth in different areas of the feed piece 170, to form a curvature profile fitting with the curvature profile of the wall on the back of the feed piece 170. The curvature profile may be formed by one or more planing rounds of the feed piece past the planing machine 163.

The computer unit 102 is arranged to control the feed depots 110, 120 and 130 via connections 188, 190 and 192. On the command of the computer unit 102, the feed depots release or drop feed pieces on feed belts 150A and 150B, for example one at a time. The computer unit 102 controls the feed belts 150A, 150B, 150C and 150D for example by adjusting the power supply to a motor 150 via a connection 186. The computer unit 102 also controls feed belts 152A, 152B and 152C for example by adjusting the power supply to a motor 152 via a connection 184. The power supply is adjusted for example via a separate switch or adjuster. The belts 150C and 150D feed the feed piece 170 further to the sawing surface 161 and to the piece feeding device 160 which is for example in the left extreme position as far away from the saw 166 as possible to receive the feed piece 170. The building element sawed off from a remnant piece, i.e. the piece separated by sawing (not shown), exits the sawing surface 161 for example by the aid of rotation of the removing wheels 168 or supported by a separate removing belt (not shown) to the right in the figure. The computer unit 102 registers in its memory the identifier of the original feed depot of the remnant piece which is for example the remnant piece 172 depicted in Fig. 1, and the length of the remnant piece. Different feed depots may contain materials of a different quality and different type. Therefore, for each remnant piece, it is necessary to store the information about the original feed depot. In one embodiment of the invention, the remnant piece is lead by the belts 152A, 154B and 154C to the remnant depot 140 or therefrom to the feeding device 160. In one embodiment of the invention, in this case, the belts 150C and 150D are raised upwards so that the remnant piece can be obtained from underneath. In one embodiment of the invention, alternatively, the remnant depot may be located on the other side of the sawing surface 161 and the saw relative to the feed depots 110 to 130, in which case the piece feeding device opens, moves to the side or lowers itself down and allows the remnant piece to pass to the other side. The computer unit 102 is arranged to control the operation of the remnant depot 140 via a connection 194. The computer unit 102 for example moves up and down the surfaces of the remnant depot 140 on which different remnant pieces have been stowed. The computer unit also controls, in this case, the removal of the remnant piece from the remnant depot 140 back to the belts 152A, 152B and 152C. In this case, the remnant piece may be fed by these belts back to the sawing surface and to the feeding device 160. The above-mentioned connections 180 to 194 may be formed by a cable which conveys the control signals, or by a wireless connection. In one embodiment of the invention, via a connection 196, the computer unit 102 controls the cutting depth of the planing machine 163, i.e. how much is planed from the feed piece 170. The feed piece may be moved back and forth under planing of the planing machine by the feeding device 160 and at least one gripping member (not shown) connected thereto or a gripping member provided at one end. The cutting depth may be controlled slidingly during planing of one feed piece according to the curvature of the measured wall.

In one embodiment of the invention, the sawing surface 161 is arranged to tilt and thus to pick feed pieces according to its tilting angle from at least one feed depot, to receive a feed piece from the remnant depot, to pass a feed piece to the remnant depot or to keep a feed piece in a correct angle for making the desired sawed surface on the feed piece.

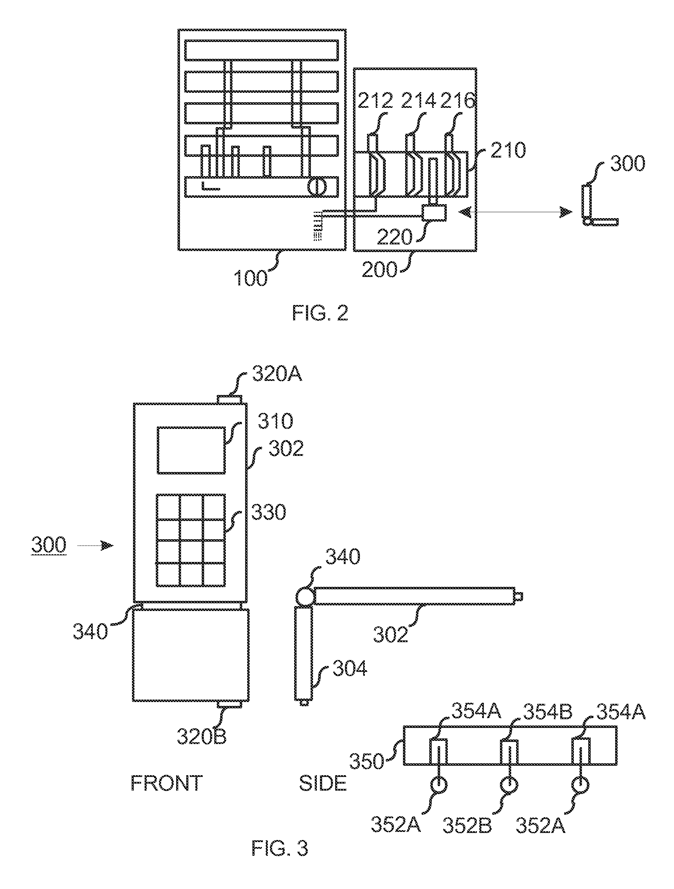

Fig. 2 represents a block diagram of one system of sizing and manufacturing building elements according to the present invention. The system comprises a sawing device 100 which complies for example with Fig. 1 and 2. A packing unit 200 is connected to the sawing device. The packing unit 200 comprises a packing surface 210 on which the finished sawed pieces are pushed for example by rolls controlled by the computer unit 102. Located on the packing surface are tying ribs 212, 214, 216 which feed for example cable tie or other tying material, each of them tightening a single tie around the finished sawed pieces on the command of the computer unit 102. In one embodiment of the invention, the tying ribs are arranged to turn forth from the packing surface over the finished sawed pieces. In one embodiment of the invention, the packing surface constitutes part of the sawing surface 161 of Fig. 1. In addition, the packing unit 200 comprises a printing unit 220 which is arranged to print identification information of the measurement location, such as number of the house, entrance and number of the apartment. The identification information may be an arbitrary character string or a bar code. The printing unit 220 is additionally arranged to attach the identification information on the bundle of the finished sawed pieces. In one embodiment of the invention, the identification information is printed directly on the bundle. The system also comprises an angle measuring device 300 which comprises at least a transmitter for transmitting the measurement data to the computer unit 102.
Fig. 3 represents one measuring device 300 according to the present invention, i.e. an electronic measuring device. The measuring device 300 may also be called a corner measuring device. The measuring device 300 comprises a display 310, a keyboard 330 and an angle meter 340. The measuring device comprises at least one distance meter, for example the distance meters 320A and 320B depicted in Fig. 3. The distance meters 320A and 320B may be for example laser distance meters. The measuring device 300 is formed from an upper part 302 and a lower part 304. In addition, the measuring device 300 includes a transmitter or a receiver-transmitter which is arranged to send the measurement data for example to the computer unit 102 of Fig. 1. The measuring device 310 is arranged to communicate through a communications network which is for example the communications network 104 depicted in Fig. 1. In one embodiment of the invention, the communications network is a mobile telephone network, in which case the measuring device comprises a mobile station, a corresponding mobile station module or a data card. The mobile telephone network may be for example a GSM, GPRS or 3G network. In one embodiment of the invention, said communications network is a wireless local area network or other wireless network. The angle meter 340 is based for example on an adjustable resistor. The angle given by the angle meter 340 is the angle between the upper part 302 and the lower part 304.

In one embodiment of the invention, the measuring device 300 is arranged to communicate with a separate mobile station over a short range radio connection which may be for example BLUETOOTH™. In this case, the measuring device comprises a short range radio receiver and transmitter. In one embodiment of the invention, the measuring device 300 is arranged to communicate with a separate mobile station through a cable, for example a USB plug. In one embodiment of the invention, the user interface of the separate mobile station functions as the user interface of the measuring device 300, in which case the user interface 330 of the measuring device 300 may only constitute for example a measurement start button. In this case, the measuring device 300 may also lack the display 310.

In one embodiment of the invention, the measuring device 300 or the electronic measuring device is used to measure the length of framing studs needed for at least one partition wall to be built in a room. In this case, the electronic measuring device does not necessarily include an angle meter 340 and a lower part 304. This is carried out by a separate function of the user interface 330, for example a button or a menu function. In this case, the measuring device 300 or other electronic measuring device conveys the information about the height and length of the room for example to the computer unit 102 of Fig. 1. In this case, the computer unit selects the feed depot containing framing studs, i.e. uprights, of a partition wall as the feed depot and saws the framing studs in a number which corresponds to the repeating gap between the framing studs in the partition wall. The length of the framing studs is sawed according to the measured height, possibly taking into account the horizontal framing plates below and above.

In one embodiment of the invention, the measuring device 300 comprises a connection, for example a USB connection, to an external curvature meter 350 by which the wall curvature profile which comprises for example the center of at least one curvature area and the depth of the curvature area is measured. In one embodiment of the invention, the curvature meter 350 is formed for example from three or more rolls 352A to 352C, each of which comprises an arm arranged to spring inside cylinders 354A to 354C. Inside the cylinders 354A to 354C, there are springs which return the arms out to their extreme position. The cylinders 354A to 354C measure how deep the arms extend inside each cylinder. In addition, the curvature meter is arranged to measure the combined rotational travel of at least one of the rolls 352A to 352C, which is constituted by the complete rotation rounds during the measurement, and the portion short of a complete round, and thus to conclude the length of the wall. The length of the wall is measured by drawing the curvature meter along the wall for the entire extent of the wall so that the rolls 352A to 352C contact the wall throughout the length. Thus, by comparing the relative depths of the arms of adjacent cylinders inside the cylinders at each point in time, it is possible to measure the curvature depth in a specific area of the wall. The measuring device 300 is arranged to obtain the information from the curvature meter 350 via an external connection and to connect the measurement of the curvature meter to the length of the wall. The profile of curvature is sent to the sawing device 100 in connection with the measurement data concerning the angles and the sides, for example in the same message.

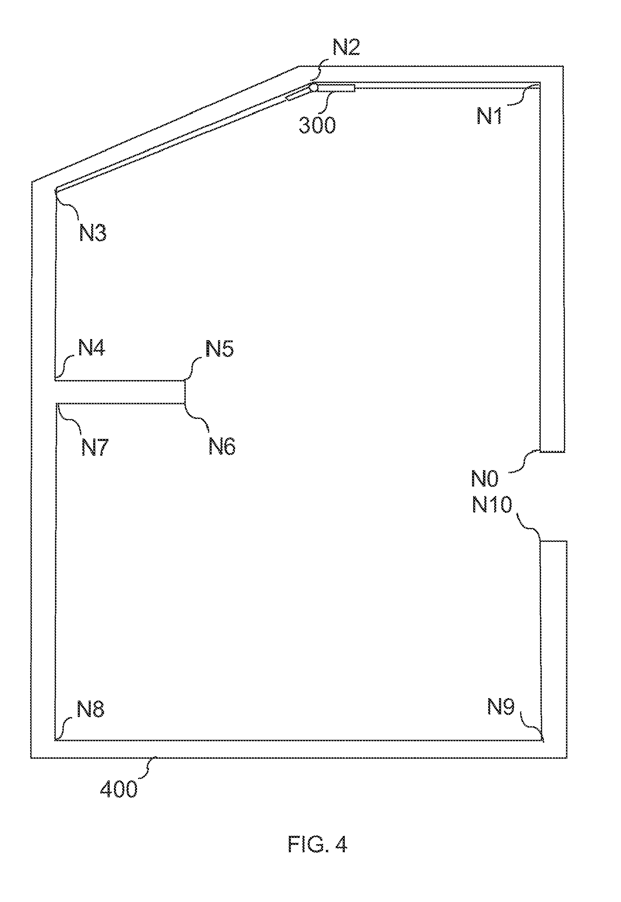

Fig. 4 represents the use of the measuring device according to Fig. 3 on a measurement location. The figure shows a plan of the location 400 which is for example a room. The room comprises corners N0 to N10. The measurement proceeds for example counterclockwise from one corner to another. To begin, the user of the measuring device 300 indicates that a new measurement series begins through the user interface 330 or an external user interface, for example on a mobile telephone. In this connection, the user can enter the identification information of the location by the user interface 330. As the new measurement series begins, the user of the measuring device 300 aligns the edge of the hinge area of the measuring device with the edge N0 of the door so that the upper part 302 points towards the corner N1. In this case, the lower part 304 is aligned with the inner edge of the door. Then, the user starts the measurement by the user interface 330. The user can, for these situations, skip the angle measurement and determine a default miter angle to the corner N0 which is used for example at the openings of entrance doors. The result of the measurement can be readable via the display 310 or via an external user interface. The user moves on to measure the corner N1 and aligns the upper part 302 with the wall N1 to N2 and the lower part with the wall N0 to N1. The user selects the distance measurement from the user interface only in the direction of the wall N1 to N2. The user starts the measurement from the user interface 330, in which case the measuring device 300 measures the miter angle of the corner N1 and distance to the corner N2. In one embodiment of the invention, the user measures, in the same connection, the curvature of the wall N1 to N2 by the curvature meter 350. After this, the user moves on to measure the corner N2 and places the measuring device to the corner N2 so that the lower part is aligned with the wall N2 to N1 and the upper part is aligned with the wall N2 to N3. The user starts the measurement for example from the user interface 330, in which case the measuring device measures the miter angle of the corner N2 and lengths of the sides N2 to N1 and N2 to N3 by the distance meters 320A and 320B. In one embodiment of the invention, the user measures, in the same connection, the curvature of the walls N2 to N1 and N2 to N3 by the curvature meter 350. The direction of the measuring device 300 may vary because the measuring device 300 compares new measurement results for the sides N2 to N1 and N2 to N3 with earlier length measurements concerning other walls. If one of the measurement results matches to a previous result, the measuring device 300 concludes its direction. The measurement proceeds in the same manner via corners N3 to the corner N4. To aid in measuring the wall N4 to N5, a temporary plate which is placed directly against the wall N5 to N6 so as to extend outwards from the corner N5 may be used, in which case the laser distance meter receives the necessary reflection. The auxiliary plate may be used in the same manner in measuring the wall N5 to N6. In the case of the corner N6, the auxiliary

plate can also be used or the wall N6 to N7 can just be measured. The measurement proceeds in the manner presented above for the part of the corners N7 to N9. The last wall N9 to N10 is measured by the same principle as the wall N0 to N1, in which case a default miter angle, for example of 45 degrees, is provided to the edge of the door. The user indicates that the measurement has ended by the user interface 330. In this case, the identification information of the measurement location, the numbers of the corners or equivalent identifiers, their miter angles and the lengths of the sides connecting the corners are presented on the display 310. In one embodiment of the invention, the curvature of the sides, if measured, is also presented. The user may separately select some of the corners for remeasurement. The user may also enter the number or identifiers and types of the corners beforehand, in which case the measuring device 300 requests the user to position the measuring device 300 in a specific order in each corner at a time and to start the measurement of the corners and the sides when the measuring device 300 is positioned in each corner. The measurement of a specific corner is started for example by a button in the user interface 330. The direction of the measuring device 300 is concluded by combining the new results with old ones. As the measurement is completed, the user can forward the results of the measurement from the measuring device 300 to the computer unit 102 through a communications network 104. The results of the measurement comprise for example the magnitude of the angles of the corners, the lengths of the sides and the possible curvature profiles of the sides.

In one embodiment of the invention, as the measurement proceeds from one corner to another, the measuring device 300 forms in its memory a model of the baseboards or the cornices and presents on the display 310 any inconsistent results wherein the measurement continues despite the intersecting walls or a closed ring.

In one embodiment of the invention, the identification information of the location is transmitted beforehand to the measuring device 300 through a communications network 104 for example from the computer unit 102 or an arbitrary server on the communications network 104. In this case, the user just selects a location from a list or directory by the display 310 and the user interface 330 before beginning the measurement.

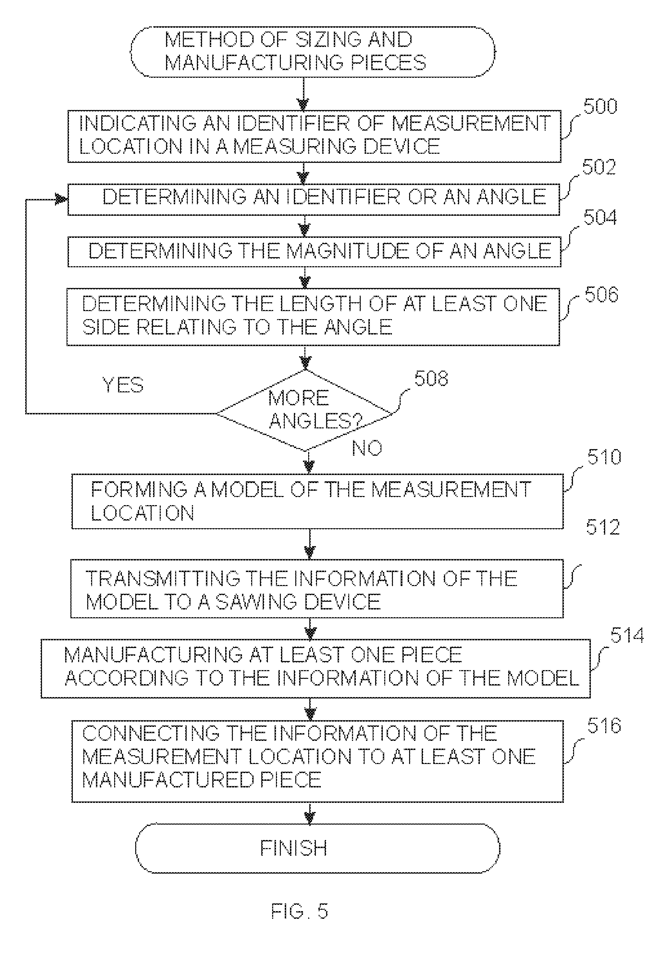

Fig. 5 represents one method according to the present invention for sizing and manufacturing building elements.

In step 500, the user indicates the identifier of the measurement location to the electronic measuring device, in short a measuring device, such as a measuring device. The measurement location may be for example an address including the postal code, street, house number, entrance and number of the apartment. The indication is carried out via the user interface of the measuring device or a data link.

In step 502, the user determines an identifier of at least one angle, for example selects the order number of the angle. In this case, in one embodiment of the invention, the user of the measuring device also indicates the type of the angle to the measuring device, for example whether the angle is a default angle, such as at the edge of a door, or an angle to be measured.

In step 504, the magnitude of the angle is determined by the angle between the lower part and the upper part of the measuring device.

In step 506, the length of at least one side relating to the angle is determined. In one embodiment of the invention, the length is determined by a laser distance meter.

In step 508, the measuring device, in one embodiment of the invention, builds in its memory a data structure which comprises a model of the walls of the measurement location and the angles between them. In one embodiment of the invention, the measuring device informs the user of inconsistences in the model, such as intersecting walls or closed spaces. Such measurement results may be produced if the widths of protrusions in partition walls and other similar walls are measured by a laser distance meter without an auxiliary plate.

In one embodiment of the invention, the measuring device is arranged to receive, relating to each side, i.e. wall, the information of the material to be used. In this case, the user indicates the material to be used which is converted in the measuring device or the sawing device to the identifier of the feed depot of the sawing device, for example a number.

In step 510, the measuring device checks whether any angles are left to be measured. If there are angles to be measured, the method returns to step 502. If there are no angles to be measured, the method moves on to step 512.

In step 512, the measuring device transmits the information of the model to the sawing device. In one embodiment of the invention, the information of the model is transmitted to the computer unit 102.

In step 514, at least one piece is manufactured in the sawing device according to the information of the model.

In step 516, the information of the measurement location is attached to at least one manufactured piece. In one embodiment of the invention, the attachment is made by an adhesive label. In one embodiment of the invention, the attachment means printing of the information of the measurement location on at least one piece.

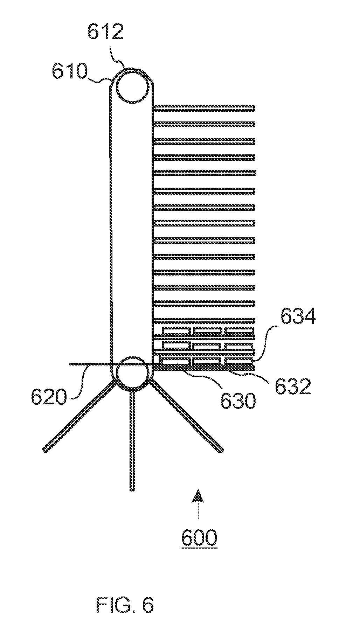

Fig. 6 represents a side view of one feed depot according to the present invention. The feed depot 600 is for example formed from at least one support belt 610 which rotates from up to down and which is for example rotated by a cogwheel 612, and support strips, such as the support strip 614, connected perpendicularly thereto. The support strips are made for example from profile iron and are disposed at regular intervals on the support belt 610. The support strips support at least one feed piece, for example the feed pieces 630, 632 and 633. One feed piece is removed from the feed depot on the belts 150A and 150B shown in Fig. 1 for example by a guide 620 which pushes the feed pieces on the same surface of the support strips to the side by the width of one feed piece. Once the guide has been ejected to the extreme position, in which case the surface is empty of feed pieces, the guide is returned in and the support belt is rotated downwards so that a surface containing new feed pieces and formed by the support strips of different support belts is introduced to the surface of the guide. The feed piece is for example a baseboard. The purpose of the feed depot and the support strips is to prevent the deformation and damaging of feed pieces and to prevent the blockage of the feed depot or the feeding of more than one feed piece due to the curvature or small dimensional differences of the feed pieces.

The embodiments of the invention presented above can be used as combined together in an arbitrary manner. One or more of the above-mentioned embodiments of the invention may be used together with another embodiment of the invention to further form a new embodiment of the invention.

The invention is not limited merely to the exemplifying embodiments referred to above; instead, many variations are possible within the scope of the inventive idea defined by the claims.

## Claims

1. A method for sizing and manufacturing building elements, the method comprising:
determining an identifier of a measurement location (500) in a measuring device (300),
performing at least one distance measurement by the measuring device,
forming a message which comprises at least one distance measurement and the identifier of the measuring location, and
sending the message from the measuring device to a remote node (102) through a data network, **characterized in that** the method further comprises the steps:
measuring the curvature profile of a wall by the measuring device; and
forming a message which additionally comprises the curvature profile.

2. The method according to claim 1, **characterized in that** the method further comprises the steps:
receiving the message in a computer unit of a sawing device;
controlling the sawing device by the computer unit;
controlling the sawing length in the sawing device based on the distance measurement included in the message; and
sawing at least one building element by a saw of the sawing device.

3. The method according to claim 2, **characterized in that** the method further comprises the steps:
removing at least one building element from the sawing device;
moving at least one building element to a packing device;
tying at least one building element in the packing device;
printing the identifier of the measurement location (500); and
connecting the identifier of the measurement location to at least one building element.

4. The method according to any one of the preceding claims 1 to 3, **characterized in that** the method further comprises the steps:
forming an identifier of at least one angle in the measuring device;
determining the magnitude of at least one angle by the measuring device;
determining the length of at last one side relating to at least one angle based on at least one distance measurement; and
adding the magnitude of said at least one angle in the message.

5. The method according to claim 4, **characterized in that** the method further comprises the step:
controlling the sawing angle in the sawing device based on the magnitude of at least one angle included in the message.

6. The method according to claim 4, **characterized in that** the method further comprises the step:
forming a model according to the magnitude of at least one angle and according to the length of at least one side relating to at least one angle in the measuring device.

7. The method according to claim 6, **characterized in that** the method further comprises the steps:
searching in the measuring device for at least one inconsistence from the model, the inconsistence comprising at least one intersecting side relating to the model; and
informing the user of the inconsistence using a user interface.

8. The method according to any one of the preceding claims 1 to 7, **characterized in that** the measuring device comprises a laser distance meter.

9. A system for sizing and manufacturing building elements, the system comprising:
a measuring device (300) arranged to receive an identifier of a measurement location (500), to perform at least one distance measurement, to form a message which comprises at least one distance measurement and the identifier of the measurement location, and
to send the message from the measuring device to a remote node through a data network, and
a sawing device (100) arranged to receive the message, to control the sawing length based on the distance measurement included in the message, and
to saw at least one building element, **characterized in that** said system further comprises:
a measuring device (300) arranged to measure the curvature profile of a wall;
a sawing device (100) arranged to receive a message which comprises the curvature profile, and to plane the curvature profile on the back of at least one building element.

10. An electronic measuring device, the device comprising:
a user interface (310,330) arranged to receive an identifier of a measurement location (500),
a distance meter arranged to perform at least one distance measurement,
a processor to form a message which contains at least one distance measurement, and
a transmitter arranged to transmit the message to a remote node through a data network, **characterized in that** the device further comprises:
a curvature meter (350) for measuring the curvature profile of a wall; and
said processor to form said message which additionally comprises said curvature profile.

11. The electronic measuring device according to claim 10, **characterized in that** the device further comprises:
an angle meter (340) arranged to determine the magnitude of at least one angle; and
a processor arranged to form an identifier of at least one angle in the measuring device (300), to determine the length of at least one side relating to at least one angle based on at least one distance measurement, and to add the magnitude of at least one angle to the message.

12. The electronic measuring device according to claim 10, **characterized in that** the device further comprises:
a processor to form a model according to the magnitude of at least one angle and according to the length of at least one side relating to at least one angle.

13. The electronic measuring device according to claim 12, **characterized in that** the device further comprises:
a processor arranged to search for at least one inconsistence in the model, the inconsistence comprising at least one intersecting side relating to the model; and
a user interface arranged to inform the user of the inconsistence using the user interface.

14. The electronic measuring device according to any one of the preceding claims 9 to 13, **characterized in that** the measuring device comprises at least one laser distance meter.

15. A sawing device, comprising:
a computer unit arranged to receive a message, to control the sawing length based on a distance measurement included in the message, to register the lengths of at least two remnant pieces stored in a remnant depot, and to control the remnant depot to deliver a selected remnant piece,
at least one feed depot for storing feed pieces, arranged to deliver at least one feed piece,
a remnant depot to store at least two remnant pieces,
a feeding device, and
a saw for forming a building element from at least one feed piece, **characterized in that** the sawing device further comprises:
a computer unit arranged to receive the message which additionally comprises a curvature profile; and
a planing machine to plane the curvature profile on the back of at least one feed piece.

16. The sawing device according to claim 15, **characterized in that** the sawing device further comprises:
a computer unit arranged to receive a message, to control the sawing length based on a distance measurement included in the message, and to control the saw to saw at least one building element.

17. The sawing device according to any one of the preceding claims 15 to 16, **characterized in that** the sawing device further comprises:
means to remove at least one building element from the sawing device,
means to move at least one building element to a packing device,
means to tie at least one building element in the packing device,
means to print an identifier of a measurement location (500) and to connect the identifier of the measurement location to at least one building element.

18. The sawing device according to any one of the preceding claims 15 to 17, **characterized in that** the sawing device is located in a movable truck container or trailer.
